# EUROPEAN PATENT APPLICATION

(11) **EP 4 394 688 A1**
(43) Date of publication of application: **03.07.2024**
(21) Application number: 22861039.0
(22) Date of filing: 26.07.2022
(51) Int. Cl.: G06Q 50/10, G06Q 50/26

(54) **INFORMATION PROCESSING DEVICE, DISPLAY TERMINAL, AND INFORMATION PROCESSING METHOD**

(30) Priority: 23.08.2021 JP 2021135913
(71) Applicant: Panasonic Intellectual Property Management Co., Ltd., Osaka-shi, Osaka 540-6207 (JP)
(72) Inventor: KAWAMOTO, Hirokazu, Osaka 571-8501 (JP); KIKKAWA, Masayuki, Osaka 571-8501 (JP); TANABE, Takumi, Osaka 571-8501 (JP); BABA, Takayasu, Kanagawa 224-8520 (JP)
(74) Representative: Eisenführ Speiser
(86) International application number: PCT/JP2022/028807
(87) International publication number: WO 2023/026748

(57) **Abstract**

An information processing device according to the present disclosure includes a notification module, a communication module, and an analysis module. The notification module notifies a user of survey demand information for indicating a survey demand point included in a survey demand region that has a survey demand regarding the traffic volume. The communication module receives a captured image captured at the survey demand point by the user in accordance with the survey demand information. The analysis module estimates a traffic volume in the survey demand region based on the captured image that has been received.

## Description

### TECHNICAL FIELD

The present disclosure relates to an information processing device, a display terminal, and an information processing method.

### BACKGROUND ART

In recent years, community development is being conducted aiming at regional vitalization and the like, on the basis of urban planning using smart planning. The smart planning is a method of urban planning by migratory behavior simulation for examining facility locations or construction of migration routes that optimize both the convenience of users and business activities of business operators, on the basis of behavior data for each attribute of people obtained by, for example, a traffic volume survey. Note that the "smart planning" may be a mode of collecting behavior data of a moving body such as a pedestrian and a vehicle, a mode of visualizing behavior data, a mode of simulating behavior, or a mode obtained by combining these.

### CITATION LIST

### Patent Literature

Patent Literature 1: JP 2015-076077 A

### SUMMARY OF INVENTION

In the smart planning, for example, behavior data for each attribute of people such as a flow of people and a vehicle traffic volume obtained by a traffic volume survey is important. As a method of the traffic volume survey, there are known methods of estimating the traffic volume on the basis of manual measurement or a captured image. However, there are cases where measurement data for a traffic volume survey is insufficient with respect to the survey demand, for example, the survey frequency or the survey points are limited from the viewpoint of the labor cost of manual measurement or the cost required for installation of cameras.

A problem to be solved by the present disclosure is to assist collection of measurement data for a traffic volume survey.

An information processing device according to the present disclosure includes a notification module, a communication module, and an analysis module. The notification module is configured to notify a user of survey demand information for indicating a survey demand point included in a survey demand region that has a survey demand regarding a traffic volume. The communication module is configured to receive a captured image captured at the survey demand point by the user in accordance with the survey demand information. The analysis module is configured to estimate a traffic volume in the survey demand region based on the captured image that has been received.

### BRIEF DESCRIPTION OF DRAWINGS

FIG. 1 is a block diagram illustrating an example of a configuration of an assistance system according to an embodiment.
FIG. 2 is a block diagram illustrating an example of a hardware configuration of each device included in the assistance system according to the embodiment.
FIG. 3 is a sequence diagram illustrating an example of assist processing according to the embodiment.
FIG. 4 is a diagram illustrating an example of a display screen displayed on an administrator-side terminal device in the assist processing according to the embodiment.
FIG. 5 is a diagram illustrating an example of a display screen displayed on a user-side terminal device in the assist processing according to the embodiment.
FIG. 6 is a diagram illustrating an example of a display screen displayed by the user-side terminal device in the assist processing according to the embodiment.

### DESCRIPTION OF EMBODIMENTS

Hereinafter, embodiments of an information processing device, a display terminal, and an information processing method according to the present disclosure will be described with reference to the drawings.

Note that, in the description of the present disclosure, components having the same or substantially the same functions as those described previously with respect to a previously described drawing are denoted by the same reference numerals, and description thereof may be omitted as appropriate. In addition, even in a case where the same or substantially the same portion is represented, the dimensions or ratios thereof may be represented differently depending on a drawing. Furthermore, for example, from the viewpoint of ensuring visibility of the drawings, in the description of each drawing, there are cases where only main components are denoted by reference numerals and components having the same or substantially the same functions as those described previously in a previous drawing may not be denoted by any reference numerals.

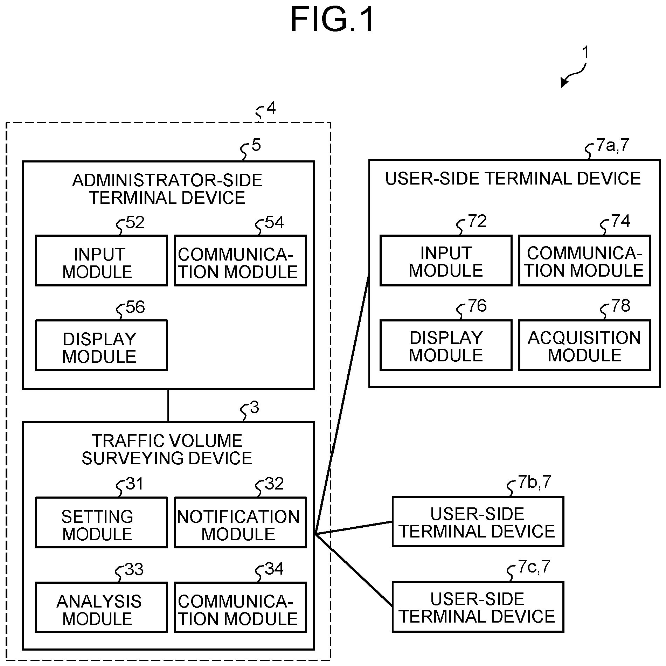

FIG. 1 is a block diagram illustrating an example of a configuration of an assistance system 1 according to an embodiment. The assistance system 1 according to the embodiment executes assist processing for assisting collection of measurement data for a traffic volume survey. The assistance system 1 includes a management system 4 and at least one user-side terminal device 7. The management system 4 includes a traffic volume surveying device 3 and at least one administrator-side terminal device 5. Herein, the traffic volume surveying device 3 is an example of an information processing device. Each of the administrator-side terminal device 5 and the user-side terminal device 7 is an example of a display terminal.

As an example, the assistance system 1 can be configured as a server-client type system including the traffic volume surveying device 3 as a server device and the user-side terminal device 7 as a client device. "The traffic volume surveying device 3 or the management system 4" and the user-side terminal device 7 are communicably connected via a telecommunication line such as the Internet. As the user-side terminal device 7, a smartphone, a tablet PC, a car navigation system, or the like can be used as appropriate.

Note that illustrated in FIG. 1 is an example of the assistance system 1 including three user-side terminal devices 7a, 7b, and 7c; however, it is not limited thereto. The assistance system 1 may include two or four or more user-side terminal devices 7.

As an example, the management system 4 can be configured as a server-client type system including the traffic volume surveying device 3 as a server device and the administrator-side terminal device 5 as a client device. The traffic volume surveying device 3 and the administrator-side terminal device 5 are communicably connected via a telecommunication line such as a dedicated line or the Internet. As the traffic volume surveying device 3, a server device, a PC, or the like can be used as appropriate. As the administrator-side terminal device 5, a smartphone, a tablet PC, or the like can be used as appropriate.

Note that although the example of one administrator-side terminal device 5 is illustrated in FIG. 1, it is not limited thereto. The management system 4 may include two or more administrator-side terminal devices 5.

The traffic volume surveying device 3 has functions as, for example, a setting module 31, a notification module 32, an analysis module 33, and a communication module 34. In the assist processing, the traffic volume surveying device 3 receives the setting of a survey demand from the administrator-side terminal device 5 and notifies the user-side terminal devices 7 of the survey demand that has been received. In addition, the traffic volume surveying device 3 receives information, corresponding to the survey demand, from the user-side terminal device 7, and performs traffic volume analysis based on the information received.

The setting module 31 sets a survey demand point in a survey demand region in accordance with input by an administrator-side user to the administrator-side terminal device 5. As an example, the survey demand point is set in the survey demand region on a map. In addition, the setting module 31 sets an incentive to be given to a user who captures an image in response to the survey demand and a weight indicating urgency of the survey demand.

Herein, the survey demand region refers to a region for which the traffic volume survey is requested to be performed. The survey demand region may be expressed as, for example, a region for which collection of behavior data used for smart planning is demanded or a region for which implementation of smart planning is planned. As an example, the survey demand region is a region on a map for which a traffic volume survey is requested to be performed. As an example, the survey demand region is information defining a region for which a traffic volume survey is requested to be performed, and is information indicating a region defined by a name, the name of a place, or others, without being limited to a map, or a region defined by a distance from a specific position or the like.

The notification module 32 notifies a user of survey demand information for indicating a survey demand point included in a survey demand region that has a survey demand regarding the traffic volume. As an example, the survey demand information is information for indicating the survey demand point on a map. The survey demand information includes at least one of a photographing direction at the survey demand point, a photographing target to be included in the angle of view at the time of photographing at the survey demand point, and the time slot of the photographing at the survey demand point. The notification module 32 also determines whether or not to notify the user of the survey demand information on the basis of, for example, the position of the user indicated by position information of the user-side terminal device 7 or user evaluation information to be described later.

The analysis module 33 estimates the traffic volume in the survey demand region on the basis of a captured image of the survey demand point received from a user-side terminal device 7. It suffices that the estimation of the traffic volume be performed by a known method. The analysis module 33 also calculates user evaluation information for evaluating the user on the basis of at least one of the quality of the captured image, the promptness of photographing for the survey demand, the presence or absence of photographing for the survey demand information, and a going-out pattern of the user. For example, the analysis module 33 calculates high user evaluation information for users who have obtained a captured image with high image quality or a captured image with a large angle of view, users who capture an image in a short time from notification of survey demand information, users who have captured an image in response to survey demand information, users who frequently capture an image in response to survey demand information, and users who are likely to go out in a time slot of the survey demand.

The communication module 34 receives various settings related to a survey demand by the administrator-side user from the administrator-side terminal device 5. The communication module 34 also transmits the survey demand information to a user-side terminal device 7. In addition, the communication module 34 receives a captured image of the survey demand point captured by a user such as a citizen in accordance with the survey demand information together with information of the photographing time or the photographing position.

The administrator-side terminal device 5 has functions as, for example, an input module 52, a communication module 54, and a display module 56. In the assist processing, the administrator-side terminal device 5 receives input of a survey demand by a user and outputs the received survey demand to the traffic volume surveying device 3.

The input module 52 receives, for example, an input operation related to setting of a survey demand point included in a survey demand region on a map, that is, various settings related to the survey demand by the administrator-side user.

The communication module 54 transmits the received settings of the survey demand point to the traffic volume surveying device 3. In addition, the communication module 54 receives, from the traffic volume surveying device 3, map information and information regarding the survey demand such as presence or absence of photographing for each survey demand point and captured images.

The display module 56 displays a map indicating the survey demand region that has a survey demand regarding the traffic volume. The display module 56 also displays information regarding the survey demand such as the presence or absence of photographing for each survey demand point and captured images.

A user-side terminal device 7 has functions as, for example, an input module 72, a communication module 74, a display module 76, and an acquisition module 78. In the assist processing, the user-side terminal device 7 displays the survey demand from the administrator-side terminal device 5. The user-side terminal device 7 also acquires information corresponding to the survey demand by the user. Furthermore, the user-side terminal device 7 outputs the information acquired in response to the survey demand to the traffic volume surveying device 3.

The input module 72 receives operation input by the user. For example, the input module 72 receives an operation input for acquiring a captured image by a sensor 16.

The communication module 74 receives, from the traffic volume surveying device 3, survey demand information for indicating the survey demand points included in the survey demand region that has a survey demand regarding the traffic volume on a map, for example. The communication module 74 also transmits the acquired captured image, the photographing position, and the photographing time at the survey demand point to the traffic volume surveying device 3.

The display module 76 displays the survey demand points included in the survey demand region that has a survey demand regarding the traffic volume, for example, on a map in accordance with the received survey demand information.

The acquisition module 78 acquires the captured image in accordance with the user operation received by the input module 72.

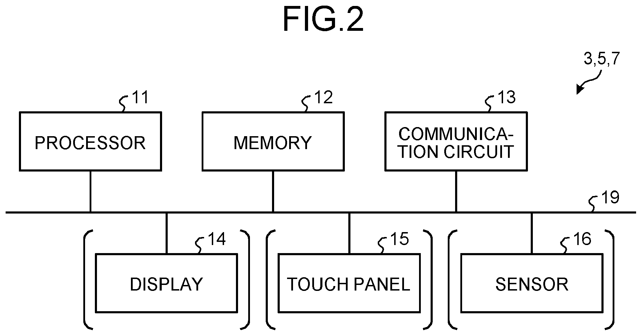

FIG. 2 is a block diagram illustrating an example of a hardware configuration of each of the devices included in the assistance system 1 according to the embodiment.

For example, each of the traffic volume surveying device 3, the administrator-side terminal device 5, and the user-side terminal device 7 includes a processor 11, a memory 12, and a communication circuit 13. The processor 11, the memory 12, and the communication circuit 13 are mutually communicably connected via, for example, a bus 19.

The processor 11 controls the overall operation of each of the devices (the traffic volume surveying device 3, the administrator-side terminal device 5, and the user-side terminal devices 7) of the assistance system 1. The processor 11 implements each function of each device by executing a program loaded in a RAM of the memory 12.

For example, in the traffic volume surveying device 3, the processor 11 implements functions as the setting module 31, the notification module 32, the analysis module 33, and the communication module 34 by executing a program loaded in the RAM of the memory 12. For example, in the administrator-side terminal device 5, the processor 11 implements functions as the input module 52 the communication module 54, and the display module 56 by executing a program loaded in the RAM of the memory 12. For example, in the user-side terminal device 7, the processor 11 implements functions as the input module 72, the communication module 74, the display module 76, and the acquisition module 78.

As the processor 11, various processors such as a central processing unit (CPU), a graphics processing unit (GPU), an application specific integrated circuit (ASIC), and a field programmable gate array (FPGA) can be used as appropriate.

The memory 12 stores various types of data or programs used by the devices of the assistance system 1. As the memory 12, various storage media or storage devices such as a read only memory (ROM), a hard disk drive (HDD), a solid state drive (SSD), and a flash memory can be used as appropriate. The memory 12 further includes a random access memory (RAM) that temporarily stores data being worked on.

The communication circuit 13 is a circuit for communicating with the outside via a network. As the communication circuit 13, a communication circuit for wired communication, a communication circuit for wireless communication, and a combination thereof can be used as appropriate. As the communication circuit for wireless communication, a communication circuit compatible with various standards such as 3G, 4G, 5G, Wi-Fi (registered trademark), or Bluetooth (registered trademark) can be used as appropriate.

For example, each of the administrator-side terminal device 5 and the user-side terminal device 7 further includes a display 14 and a touch panel 15. Each of the display 14 and the touch panel 15 is connected to the processor 11 and others via the bus 19. Note that the traffic volume surveying device 3 may further include a display 14 and a touch panel 15.

The display 14 presents a display screen to a user. As the display 14, a liquid crystal display, an organic EL display, a projector, or the like can be used as appropriate. The touch panel 15 accepts input by a user. The touch panel 15 is provided, for example, on a surface of the display 14 and outputs information corresponding to a position that is touched.

Each of the devices of the assistance system 1 is not limited to the touch panel 15, and may have another input device (the input modules 52 and 72) such as a keyboard. In addition, the devices of the assistance system 1 may further include a microphone (input module 52 or 72) for accepting voice input by a user, a speaker (presentation unit) for outputting audio corresponding to audio data, and the like. In these cases, in the assistance system 1, the survey demand may be set by voice, or the content of the display screen indicating the survey demand may be presented to the user by voice.

For example, a user-side terminal device 7 further includes a sensor 16. The sensor 16 is connected to the processor 11 and others via the bus 19. The sensor 16 includes, for example, an image sensor that captures an image or a moving image. The sensor 16 includes, for example, a position sensor that acquires position information.

Note that each of the devices of the assistance system 1 may be configured to be able to access a database that stores map information and the like via a computer-readable recording medium or a portable external storage device. As the computer-readable recording medium, for example, a CD-ROM, a flexible disk (FD), a CD-R, a digital versatile disk (DVD), or the like can be used as appropriate. In addition, as the portable external storage device, an HDD, an SSD, a flash memory, or the like can be used as appropriate.

Incidentally, the map information is map data such as a grid map or a road network map. As an example, the map information includes road network structure data. Note that the road network structure data is not limited to network structure data related to roads on which vehicles such as automobiles travel. The road network structure data may be network structure data related to traveling routes of people or various moving bodies, such as cycling lanes or sidewalks attached to the roads, and passages included in shopping arcades such in shopping streets or the like.

Note that, in the management system 4, the traffic volume surveying device 3 may include a combination of a plurality of devices. In addition, the traffic volume surveying device 3 and the administrator-side terminal device 5 may be integrally configured by a single device such as a personal computer (PC), for example, by configuring the administrator-side terminal device 5 as a display device in the management system 4. That is, as an example, the assistance system 1 may be configured as a server-client type system including the management system 4 as a server device and the user-side terminal device 7 as a client device. Here, the traffic volume surveying device 3 and the administrator-side terminal device 5 integrally configured can be expressed as an example of the information processing device or the display terminal.

Hereinafter, the operation of the assistance system 1 according to the embodiment will be described with reference to the drawings. Note that the flow of processing described below is an example, and it is also possible to modify the processing order, to delete some part of the processing, or to add other processing.

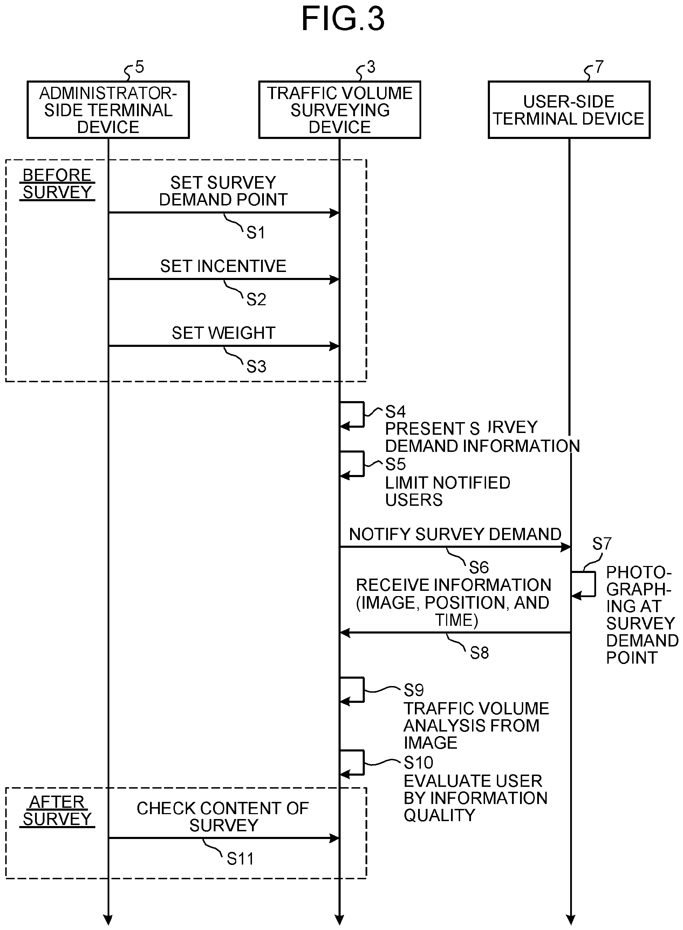

In the assistance system 1, server client processing, which is implemented by server-side processing executed by the traffic volume surveying device 3 and client-side processing executed by each of the administrator-side terminal device 5 and the user-side terminal device 7, is executed. FIG. 3 is a sequence diagram illustrating an example of assist processing according to the embodiment.

First, a survey demand point is set (S1).

Specifically, the input module 52 of the administrator-side terminal device 5 receives input of a survey demand region for which there is a demand for a traffic volume survey by an administrator-side user. The communication module 54 outputs the received survey demand region to the traffic volume surveying device 3. The communication module 34 of the traffic volume surveying device 3 outputs information for displaying the survey demand region, for example, on a map to the administrator-side terminal device 5.

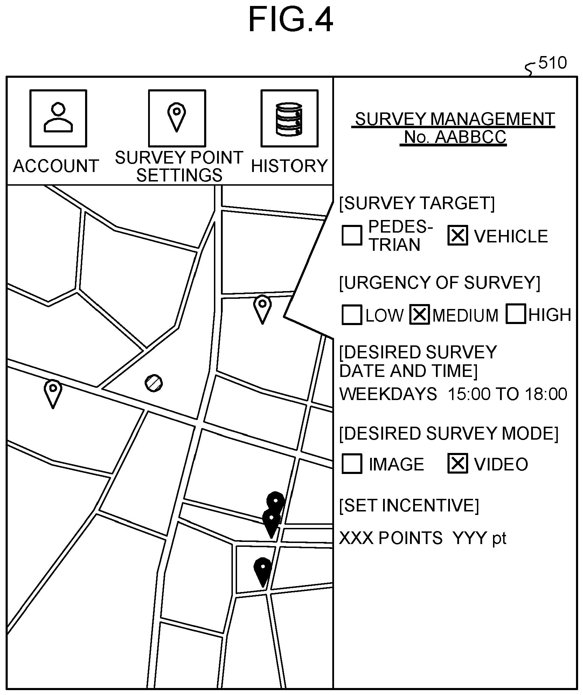

The display module 56 of the administrator-side terminal device 5 displays a map indicating the survey demand region that has a survey demand regarding the traffic volume. FIG. 4 is a diagram illustrating an example of a display screen 510 displayed by the administrator-side terminal device 5 in the assist processing according to the embodiment. As illustrated in FIG. 4, the display screen 510 includes a map of the survey demand region and survey demand points on the map. In addition, as illustrated in FIG. 4, the display screen 510 includes an operation screen for receiving an input operation of the administrator-side user regarding a survey demand such as a survey target, a desired survey date and time, and a desired survey mode. For example, the input module 52 receives an input of a survey target such as whether the target of the traffic volume survey is a pedestrian or a vehicle. According to this configuration, it is possible to obtain a captured image in accordance with a photographing method that can vary depending on whether the main subject of a photographing target is a vehicle, a pedestrian, or both. For example, the input module 52 receives input of a desired survey date and time such as the time slot of the traffic volume survey or a type of the survey date such as a weekday, a weekend, or a holiday. With this configuration, it is possible to appropriately measure the traffic volume that can vary depending on the time slot or the type of the survey date. For example, the input module 52 receives input of the desired survey mode such as whether an image is desired or a video (moving image) is desired as measurement data for the traffic volume survey. According to this configuration, it is possible to obtain a captured image in accordance with a photographing method that can vary depending on whether the main subject of a photographing target is a vehicle, a pedestrian, or both. The communication module 54 outputs information indicating the received survey demand regarding the survey demand point to the traffic volume surveying device 3. The setting module 31 of the traffic volume surveying device 3 sets the survey demand for each survey demand point on the basis of the information from the administrator-side terminal device 5.

Note that the setting module 31 of the traffic volume surveying device 3 may recommend a survey demand point where a traffic volume survey is required to estimate a flow of people, a vehicle traffic volume, or the like in the survey demand region depending on a survey demand region from the administrator-side terminal device 5. The recommendation of the survey demand point is performed, for example, on the basis of a history of previous traffic volume surveys. At this point, the setting module 31 determines a photographing position and a photographing direction for photographing the survey demand point. The setting module 31 may determine a target to be included in a captured image on the basis of the map information. The communication module 34 outputs information for displaying the survey demand point in the survey demand region, for example, on a map to the administrator-side terminal device 5. According to this configuration, even in a situation where the administrator does not know a detailed survey point, it is possible to set the survey demand point according to the setting of the survey demand region.

After the survey demand point is set, an incentive is set (S2).

Specifically, the input module 52 of the administrator-side terminal device 5 receives input of the incentive setting by the administrator-side user. Incidentally, the incentive is a benefit given to a user who has acquired measurement data in response to a survey demand. For example, as illustrated in FIG. 4, the input module 52 uses the operation screen included in the display screen 510 to receive the setting of points as an incentive to be given to a user who has photographed in response to a survey demand. For example, in a case where the administrator-side user desires to promptly perform the traffic volume survey, that is, in a case where the urgency of the survey is high, a high incentive can be given. The communication module 54 outputs the received setting of the incentive to the traffic volume surveying device 3. The setting module 31 of the traffic volume surveying device 3 sets an incentive for each survey demand point on the basis of the information from the administrator-side terminal device 5.

Setting the incentives for the traffic volume survey in this manner makes it possible to efficiently promote the survey by users for the survey demand.

Note that, for example, on the display screen 510 in FIG. 4, a survey demand point for which measurement data has been obtained is indicated by a black solid pin, and a survey demand point for which no measurement data has been obtained is indicated by a white hollow pin. In this manner, in a case where the display of a survey demand point is modified depending on the presence or absence of measurement data, the administrator-side user can easily grasp a survey demand point where no measurement data is obtained. For this reason, the administrator-side user can also take a measure of increasing an incentive to be given regarding a survey demand point where no measurement data is obtained for early implementation of the traffic volume survey.

In addition, weights are set together with the incentive setting (S3).

Specifically, the input module 52 of the administrator-side terminal device 5 receives input of the weight setting by the administrator-side user. Incidentally, the weight is information regarding the importance or the urgency of the traffic volume survey, and for example, in a case where the urgency of the survey is high, a large value can be set. For example, as illustrated in FIG. 4, the input module 52 receives input of the setting of the urgency of the survey using the operation screen included in the display screen 510. The communication module 54 outputs the received setting of the urgency of the survey to the traffic volume surveying device 3. The setting module 31 of the traffic volume surveying device 3 sets the weight for each survey demand point on the basis of the information from the administrator-side terminal device 5.

In this manner, after the setting of the survey demand points (S1), the incentive setting (S2), and the weight setting (S3) are performed prior to the traffic volume survey, information indicating the survey demand is presented (S4). Specifically, the notification module 32 of the traffic volume surveying device 3 posts the information indicating the survey demand on, for example, a traffic volume survey application or a web page.

After the information indicating the survey demand is posted, limiting notified users is performed (S5). Specifically, the notification module 32 of the traffic volume surveying device 3 limits users to whom the information indicating the survey demand is notified.

As an example, the notification module 32 determines whether or not to notify the survey demand information on the basis of the position of a user. For example, the notification module 32 determines to notify the information indicating the survey demand to a user located in the vicinity of the survey demand point. For example, the notification module 32 determines to notify the information indicating the survey demand to a user estimated to be located in the vicinity of the survey demand point in a desired time slot of the survey in accordance with a going-out pattern of the user. According to this configuration, the number of participants can be adjusted for each survey demand point in such a manner that the number of users who receive the notification is about one to two, and thus it is possible to avoid a situation in which a large number of people gather in response to the notification to cause a nuisance to the neighbors.

As another example, the notification module 32 determines whether or not to notify the survey demand information on the basis of the user evaluation information for evaluating the user. The notification module 32 determines to notify the information indicating the survey demand to, for example, a user whose captured image has a high quality such as the image quality or the angle of view, a user who photographs in a short time from the notification of the survey demand information, that is, a user who promptly photographs, a user who photographs frequently for the notification of the survey demand information, that is, a user having a high notification responsiveness, and a user having a high possibility of going out in the time slot of the target survey demand on the basis of the going-out pattern or the past photographing time. Note that the notification module 32 may modify the user evaluation information to be used only for the notified users depending on the weight of the survey demand, such as, for a survey demand with high urgency, liming only to users having high photographing promptness or notification responsiveness.

By limiting the users to be notified of the information indicating the survey demand, it becomes possible to improve the efficiency of the traffic volume survey such as improvement of the quality and the promptness of the survey.

After the limitation of the notified users is performed, the survey demand is notified (S6).

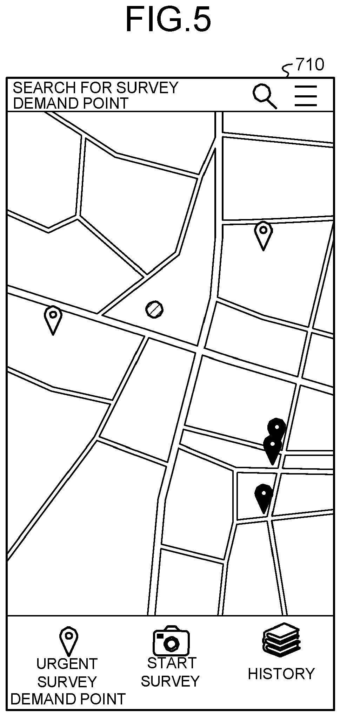

FIG. 5 is a diagram illustrating an example of a display screen 710 displayed by a user-side terminal device 7 in the assist processing according to the embodiment. Specifically, the notification module 32 outputs, to the user-side terminal device 7, the survey demand information for indicating the survey demand points included in the survey demand region that has a survey demand regarding the traffic volume on a map, for example. The display module 76 of the user-side terminal device 7 displays the display screen 710 that illustrates the survey demand points included in the survey demand region, for example, on the map, on the basis of the survey demand information from the traffic volume surveying device 3. For example, the user can confirm details of each of the survey demand points including an incentive that can be given by selecting a pin indicating the survey demand point on the display screen 710.

Note that the display of a pin indicating each of the survey demand points may be different depending on whether or not photographing has been completed, whether or not an incentive is given, or whether or not there is high urgency.

As described above, since the survey demand points and the incentive are set, for example, on the map, the user can easily confirm the survey demand points and the incentives for the area in which there is a demand for the traffic volume survey. As a result, it is possible to encourage the users to participate in the survey in response to the survey demand.

For example, after the user selects a survey start icon in response to the notification of the survey demand, photographing is performed at a survey demand point (S7) .

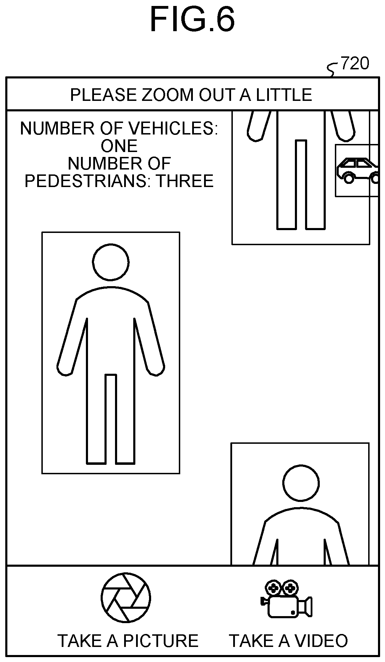

FIG. 6 is a diagram illustrating an example of a display screen 720 displayed by the user-side terminal device 7 in the assist processing according to the embodiment. Specifically, the display module 76 of the user-side terminal device 7 displays the display screen 720 including information for assisting photographing on the basis of the survey demand information from the traffic volume surveying device 3. The display screen 720 can include display of the survey demand information such as a photographing direction, a photographing target to be included in the angle of view at the time of the photographing, and a time slot of the photographing. FIG. 6 illustrates an example where the number of vehicles and the number of pedestrians are displayed as photographing targets to be included in the angle of view at the time of photographing. In addition, the acquisition module 78 acquires a captured image in accordance with a user operation. In addition, the communication module 74 transmits the acquired captured image to the traffic volume surveying device 3 together with, for example, information of the photographing position and the photographing time.

Since the information for assisting photographing is displayed in this manner on the basis of the survey demand information, the user can easily grasp an image of which position of the road in which direction is desired to be captured. This makes it possible to facilitate understanding on what type of captured image is desired to be acquired and to facilitate participation of users to the survey. In addition, the administrator can satisfy a specific survey demand such as an intent to survey a flow of people in front of this store. In community development using smart planning, there is a survey demand based on the community development that the administrator aims at, such as how the flow of people changes if a cafe is installed in a certain place. For this reason, displaying the information for assisting photographing in accordance with the survey demand information can improve the quality of the traffic volume survey based on a captured image acquired by a user, thereby making it possible to implement the traffic volume survey depending on the purpose of the community development.

Incidentally, "smart planning" refers to a method of urban planning by migratory behavior simulation for examining facility locations or construction of migration routes that optimize both the convenience of users and business activities of business operators on the basis of behavior data for each attribute of people, for example. Note that, in the present embodiment, the "smart planning" may be a mode of collecting behavior data, a mode of visualizing behavior data, a mode of simulating behavior, or a mode obtained by combining these. Furthermore, in the present embodiment, behavior data refers to, for example, data for each attribute of a moving body such as a pedestrian or a vehicle and is data including a flow rate and attribute data regarding the moving body. As the behavior data, various types of data such as a flow of people, a flow of vehicles, a traveling speed, a traveling direction, a traveling distance, a retention time, a frequency of travel or retention, and a facial expression and a motion of a person can be used as appropriate. The behavior data to be used may be selected depending on, for example, the purpose of smart planning or the required accuracy.

After photographing at the survey demand point is performed, information (image, position, and time) is received (S8). Specifically, the communication module 34 of the traffic volume surveying device 3 receives information of the captured image, the photographing position, and the photographing time from the user-side terminal device 7. In this manner, by receiving the photographing time together with the captured image, it becomes possible to collect captured images corresponding to the time slot of the survey demand despite a traffic situation that varies depending on the time slot.

After the information from the user-side terminal device 7 is received, a traffic volume analysis from the captured images is performed (S9). Specifically, the analysis module 33 estimates the traffic volume in the survey demand region on the basis of the received captured image, the photographing position and the photographing time of the captured image, and the map information. As an example, the analysis module 33 can estimate the number of pedestrians, the number of vehicles, the traveling speed of pedestrians or vehicles, an outflow to another route, an inflow from another route, or others on the basis of at least two captured images obtained at at least two photographing points.

After the traffic volume analysis, for example, user evaluation based on the quality of the information from the user-side terminal device 7 such as camera shake and the angle of view of the captured image is performed (S10). Specifically, the analysis module 33 calculates the user evaluation information on the basis of the quality of the captured image such as the image quality and the angle of view of the captured image. Alternatively, the analysis module 33 calculates, as the user evaluation information, a value of photographing promptness such as time elapsed from notification of the survey demand information to photographing, a value of photographing frequency for the notification of the survey demand information, and the possibility of the user's going out for each time or time slot based on a going-out pattern or the photographing time. Performing the user evaluation in this manner makes it possible to improve the efficiency of the survey and to expand the number of participating users, for example, by being able to notify a user suitable for the survey demand of the survey demand.

After the user evaluation, the content of the survey is checked (S11). Specifically, after the traffic volume survey for a desired survey demand point is completed by the flow of steps S4 to S10, the display module 56 of the administrator-side terminal device 5 displays a survey result such as the captured image for the survey demand point for which the traffic volume survey has been completed in response to operation input of the administrator-side user. In addition, in a case of a configuration in which the display of a pin indicating a survey demand points is switched depending on whether the survey has been performed or not on the display screen 510, the administrator-side user can confirm a survey demand point for which the survey has not yet performed at each time point.

As described above, the assistance system 1 according to the embodiment is configured to notify a user of the survey demand information for indicating the survey demand point included in the survey demand region that has the survey demand regarding the traffic volume. In addition, the assistance system 1 is configured to estimate the traffic volume in the survey demand region on the basis of the captured image captured by the user at the survey demand point in accordance with the survey demand information. According to this configuration, it is possible to encourage users such as ordinary citizens to participate in the traffic volume survey on the basis of the survey demand information of the traffic volume set by the administrator, and thus, it is possible to satisfy the demand of the traffic volume survey set depending on the purpose of the community development by using a captured image obtained by a user at a position or timing suitable for the survey demand. In other words, it is possible to assist collection of measurement data for the traffic volume survey. Therefore, according to the assistance system 1 of the present disclosure, it is possible to implement a traffic volume survey at low cost without installing facilities such as a monitoring camera and without arranging a dedicated investigator at each point.

Note that, in the flow illustrated in FIG. 3, the incentive setting (S2), the weight setting (S3), limiting the notified users (S5), and the user evaluation based on the quality of information (S10) are not essential, and some or all of them may not be performed.

Note that a case where the number of vehicles and the number of pedestrians are displayed as photographing targets to be included in the angle of view at the time of photographing has been described as an example with reference to FIG. 6, however, it is not limited thereto. The photographing target to be included in the angle of view at the time of photographing is not limited to people or vehicles and may be the number of lanes on a road, a sidewalk, or a landmark such as a store or a building in the surroundings. For example, photographing a pedestrian may raise a concern of being treated as a suspicious person. Meanwhile, if the traffic volume survey is performed through promotion of photographing of a landmark and on the basis of pedestrians or vehicles captured at the time of photographing the landmark, users can participate in the survey with a sense of security.

Note that, after the photographing at the survey demand point is performed, the input module 72 of the user-side terminal device 7 may receive input of additional information of the captured image. For example, the display module 76 displays an input screen for the additional information after the photographing. After capturing an image, the photograph-taker inputs additional information such as the number of pedestrians, the number of vehicles, the number of people in a group, or the number or a ratio of smiling people included in the captured image by the input module 72. The additional information that has been input is transmitted to the traffic volume surveying device 3 together with the captured image in step S8. Furthermore, the analysis module 33 of the traffic volume surveying device 3 conducts the traffic volume survey further based on the additional information. According to this configuration, it is possible to omit processing with high calculation cost such as the number of people in a group or the ratio of smiles.

Note that the input module 72 of the user-side terminal device 7 may receive input of weather information at the time of the survey as the additional information. Alternatively, the sky may be included as the photographing target to be included in the angle of view at the time of photographing. Alternatively, the notification module 32 may notify the survey demand information in such a manner as to encourage to include the sky at the time of photographing or to separately photograph the sky as the additional information after the photographing. According to this configuration, detailed weather at the time of the survey can also be acquired, and thus the traffic volume that can vary depending on the weather can be appropriately measured.

Note that the technology according to the present disclosure can be applied not only to the traffic volume survey but also to various surveys such as a weather survey or a reception situation survey.

Note that, in each of the above-described embodiments, a case where a survey demand region that has a survey demand regarding the traffic volume, a survey demand point in the survey demand region, and the like are displayed on a map has been described as an example. Meanwhile, these maps are not limited to map data such as a grid map or a road network map. The map to be displayed may be a simple map such as an illustration as long as the relationship between geographical elements in the survey demand region and the survey demand point is shown.

In addition, in the above-described embodiment, a case where geographical elements are handled using a map has been described as an example such as that a region on a map is used as a survey demand region that has a survey demand regarding the traffic volume, that a survey demand point is set in the survey demand region on the map, and that survey demand information is information for indicating the survey demand point included in the survey demand region on the map, however, it is not limited thereto. For example, text data can be used to handle geographical elements. For example, the survey demand region may be defined using text data, the survey demand point may be set using text data, or the survey demand information may be displayed using text data. For example, the display module 76 may notify the survey demand information to the user by displaying text data such as "The latitude and the longitude of a survey demand point 1 are xxx. A survey demand point 2 is an intersection yyy". In addition, for example, the input module 52 may receive input of text data indicating an address, a district name, a building name, or the size of the region, such as the distance, regarding the survey demand region or the survey demand point. Furthermore, for example, the display module 56 may display the survey demand region or the survey demand point to the administrator-side user by text data such as "The survey demand region is a district xxx. The survey demand point 1 is an intersection yyy". Note that the display by text data may be performed together with display on a map or may be performed instead of the display on the map. Alternatively, geographical elements such as the survey demand information, the survey demand region, and the survey demand point may be presented to the user by voice by a read-aloud function of the text data. Note that the information output from the traffic volume surveying device 3 to the user-side terminal device 7 may be similar to that in the above-described embodiment, and at the same time text data for display may be generated in the user-side terminal device 7 on the basis of the survey demand information. Alternatively, text data may be output from the traffic volume surveying device 3 to the user-side terminal device 7 as the survey demand information.

A program executed by each of the devices of the assistance system 1 of the present embodiment is provided by being recorded in a computer-readable recording medium such as a CD-ROM, an FD, a CD-R, or a DVD as a file in an installable format or an executable format.

Moreover, a program executed by each of the devices of the assistance system 1 of the present embodiment may be configured to be stored in a computer connected to a network such as the Internet and provided by being downloaded via the network. In addition, the program executed by each of the devices of the assistance system 1 may be provided or distributed via a network such as the Internet.

Alternatively, a program executed by each of the devices of the assistance system 1 of the present embodiment may be configured to be provided by being incorporated in advance in a ROM or the like.

According to at least one of the embodiments described above, it is possible to assist collection of measurement data for a traffic volume survey.

While certain embodiments of the present invention have been described, these embodiments have been presented by way of example only, and are not intended to limit the scope of the invention. These embodiments may be embodied in various other forms, furthermore, various omissions, substitutions, and modifications may be made without departing from the spirit of the inventions. The accompanying claims and their equivalents are intended to cover such forms or modifications as would fall within the scope and spirit of the inventions.

### (Supplement)

The following technology is disclosed by the above description of the embodiments.

### (Technology 1)

An information processing device includes:
a notification module configured to notify a user of survey demand information for indicating a survey demand point included in a survey demand region that has a survey demand regarding a traffic volume;
a communication module configured to receive a captured image captured at the survey demand point by the user in accordance with the survey demand information; and
an analysis module configured to estimate a traffic volume in the survey demand region based on the captured image that has been received.

### (Technology 2)

The information processing device according to Technology 1, further includes a setting module configured to set the survey demand point in the survey demand region in accordance with input by an administrator-side user.

### (Technology 3)

In the information processing device according to Technology 1 or 2, the survey demand information includes at least one of a photographing direction at the survey demand point, a photographing target to be included in an angle of view at a time of photographing at the survey demand point, and a time slot of the photographing at the survey demand point.

### (Technology 4)

The information processing device according to any one of Technologies 1 to 3, further includes a setting module configured to set, in addition to the survey demand point, an incentive to be given to a user who has captured the captured image in response to the survey demand information.

### (Technology 5)

In the information processing device according to any one of Technologies 1 to 4, the notification module is configured to determine whether or not to notify the survey demand information based on a position of the user.

### (Technology 6)

In the information processing device according to any one of Technologies 1 to 5, the analysis module is configured to calculate user evaluation information for evaluating the user based on at least one of quality of the captured image, a time elapsed from notification of the survey demand information to the photographing, presence or absence of photographing for the survey demand information, and a going-out pattern of the user.

### (Technology 7)

In the information processing device according to Technology 6, the notification module is configured to determine whether or not to notify the survey demand information based on the user evaluation information.

### (Technology 8)

In the information processing device according to any one of Technologies 1 to 7, the survey demand region includes a region on a map that has the survey demand regarding the traffic volume, and the survey demand information includes information for indicating the survey demand point on the map.

### (Technology 9)

A display terminal includes:
a display module configured to display a survey demand region that has a survey demand regarding a traffic volume; and
an input module configured to receive an input operation regarding setting of a survey demand point included in the survey demand region.

### (Technology 10)

A display terminal includes:
a display module configured to display a survey demand point in accordance with survey demand information having been received, the survey demand point being included in a survey demand region that has a survey demand regarding a traffic volume;
an acquisition module configured to acquire a captured image in accordance with a user operation; and
a communication module configured to output the captured image of the survey demand point that has been acquired.

### (Technology 11)

An information processing method includes:
notifying a user of survey demand information for indicating a survey demand point included in a survey demand region that has a survey demand regarding a traffic volume;
   receiving a captured image captured at the survey demand point by the user in accordance with the survey demand information; and
estimating a traffic volume in the survey demand region based on the captured image that has been received.

### EXPLANATIONS OF LETTERS OR NUMERALS

1 ASSISTANCE SYSTEM
3 TRAFFIC VOLUME SURVEYING DEVICE
4 MANAGEMENT SYSTEM
5 ADMINISTRATOR-SIDE TERMINAL DEVICE
7, 7a, 7b, 7c USER-SIDE TERMINAL DEVICE (DISPLAY TERMINAL)
11 PROCESSOR
12 MEMORY
13 COMMUNICATION CIRCUIT
14 DISPLAY
15 TOUCH PANEL
16 SENSOR
19 BUS
31 SETTING MODULE
32 NOTIFICATION MODULE
33 ANALYSIS MODULE
34, 54, 74 COMMUNICATION MODULE
52, 72 INPUT MODULE
56, 76 DISPLAY MODULE
78 ACQUISITION MODULE
510, 710, 720 DISPLAY SCREEN

## Claims

1. An information processing device comprising:
a notification module configured to notify a user of survey demand information for indicating a survey demand point included in a survey demand region that has a survey demand regarding a traffic volume;
a communication module configured to receive a captured image captured at the survey demand point by the user in accordance with the survey demand information; and
an analysis module configured to estimate a traffic volume in the survey demand region based on the captured image that has been received.

2. The information processing device according to claim 1, further comprising a setting module configured to set the survey demand point in the survey demand region in accordance with input by an administrator-side user.

3. The information processing device according to claim 1, wherein the survey demand information includes at least one of a photographing direction at the survey demand point, a photographing target to be included in an angle of view at a time of photographing at the survey demand point, and a time slot of the photographing at the survey demand point.

4. The information processing device according to claim 1, further comprising a setting module configured to set, in addition to the survey demand point, an incentive to be given to a user who has captured the captured image in response to the survey demand information.

5. The information processing device according to claim 1, wherein the notification module is configured to determine whether or not to notify the survey demand information based on a position of the user.

6. The information processing device according to claim 1, wherein the analysis module is configured to calculate user evaluation information for evaluating the user based on at least one of quality of the captured image, a time elapsed from notification of the survey demand information to the photographing, presence or absence of photographing for the survey demand information, and a going-out pattern of the user.

7. The information processing device according to claim 6, wherein the notification module is configured to determine whether or not to notify the survey demand information based on the user evaluation information.

8. The information processing device according to claim 1, wherein
the survey demand region includes a region on a map that has the survey demand regarding the traffic volume, and
the survey demand information includes information for indicating the survey demand point on the map.

9. A display terminal comprising:
a display module configured to display a survey demand region that has a survey demand regarding a traffic volume; and
an input module configured to receive an input operation regarding setting of a survey demand point included in the survey demand region.

10. A display terminal comprising:
a display module configured to display a survey demand point in accordance with survey demand information having been received, the survey demand point being included in a survey demand region that has a survey demand regarding a traffic volume;
an acquisition module configured to acquire a captured image in accordance with a user operation; and
a communication module configured to output the captured image of the survey demand point that has been acquired.

11. An information processing method comprising:
notifying a user of survey demand information for indicating a survey demand point included in a survey demand region that has a survey demand regarding a traffic volume;
receiving a captured image captured at the survey demand point by the user in accordance with the survey demand information; and
estimating a traffic volume in the survey demand region based on the captured image that has been received.
